# EUROPEAN PATENT SPECIFICATION

(11) **EP 1 375 996 B1**
(45) Date of publication and mention of the grant of the patent: **06.06.2007**
(21) Application number: 02254450.6
(22) Date of filing: 25.06.2002
(51) Int. Cl.: F16L 37/40, F16L 37/23

(54) **Connector comprising a valve**
Steckverbinder mit einem Ventil
Connecteur avec une soupape

(43) Date of publication of application: 02.01.2004
(73) Proprietor: Jeory, J., Preston, PR1 7HY (GB); Jeory, C.P., Preston, PR1 7HY (GB); Ward, Stephen Gerard, Preston PR1 7HY (GB)
(72) Inventor: Jeory, James, Preston PR1 9BE (GB)
(74) Representative: Ajello, Michael John

(56) References cited:
- DE-B- 1 425 564
- US-A- 2 548 352
- US-A- 4 637 439
- US-A- 5 911 404
- US-A- 6 050 295

## Description

The present invention relates to a combined connector and valve which is particularly useful for connecting an air line to a connector.

A combined connector and valve is described in patent specification GB 2345526. In that case the connector is a fixed device attached to a vacuum bag.

A further valved connector is described in patent specification US 6,050,295 which describes a valved fitting used in air conditioning units. In that fitting a Schrader-type valve assembly is removably secured within a body and the exterior surface of the body is threaded to permit connection of a closure cap when the fitting is not in use, and to permit connection to an internally threaded fluid line when the cap is removed to allow introduction or removal of fluids through the fitting.

A further valved coupling according to the preamble of claim 1 is described in German patent specification 1 425 564 and comprises a two-part fitting with a male part and a tubular female part in the form of a valve. A rotatable cam ring is rotated to lock the male and female parts together. Since this device is in two parts there is a potential leakage path between them.

However, a connector according to the present invention can also be used to connect an air line to a source of compressed air or to a vacuum source in a pneumatic or hydraulic fluid line.

When a connector is to be used in a vacuum line it is particularly important to ensure that the number of leak paths is reduced as far as possible.

Known connectors usually have a body which is formed in two parts to allow a spring-loaded valve member to be located in one of the parts of the body and then the two parts of the body are attached together usually by a threaded connection. Even if this screw thread is sealed in some way it remains a potential leak path.

To avoid such a leak path, the present invention seeks to provide a connector having a body of a unitary construction including a hose tail.

The present invention further seeks to provide a connector in which the valve member can be readily removed and replaced.

According to the present invention there is provided a combined connector and valve comprising a tubular housing defining a bore axially extending through the housing from end to end thereof, and a spring loaded valve member located within the bore and sealingly engaging a valve seat in the bore, the tubular housing comprising a serrated hose tail at one end of the tubular housing, a cap located within the bore and providing said valve seat to be sealingly engaged by the valve member, and a seal ring located between the cap and the housing to prevent fluid passing through said bore around the cap, the cap being formed at to receive a removal tool to be passed along the bore for removal of the cap through the bore; characterised in that the tubular housing is a one-piece body including the serrated hose tail and containing the cap, the spring-loaded valve member and the seal ring; in that the bore contains a further seal ring so as to sealingly engage with any connector inserted into the bore at the end of the housing remote from the hose tail; and wherein the housing has a spring-loaded connecting sleeve containing ball bearings retained in an end region of the one-piece body opposite that of the serrated hose tail.

The cap may be threadedly engaged within the housing and removable therefrom to enable removal of the valve member.

The first bore can have a threaded length, engageable by a threaded length of the cap.

An elongate part of the valve member may extend through a bore in the cap when the valve member is seated.

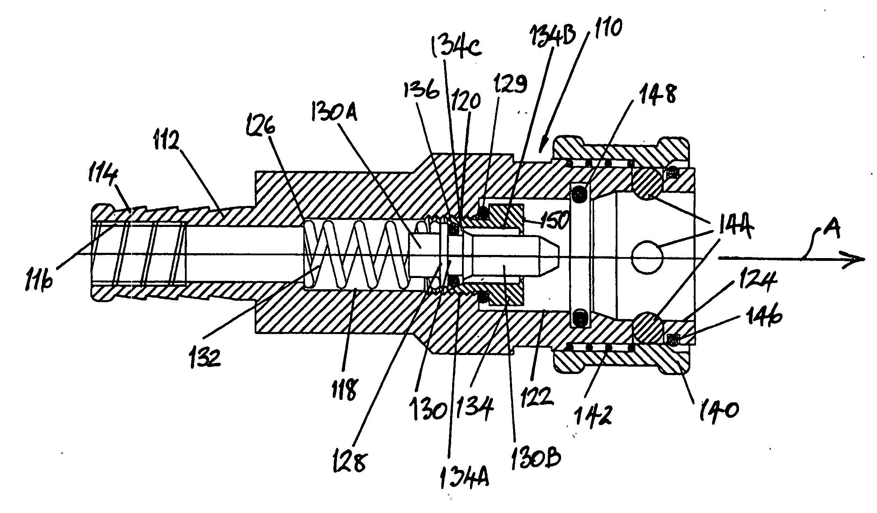

The present invention will now be more particularly described with reference to the accompanying drawing which shows, in cross section, one form of assembled line connector and valve according to the present invention.

Referring to the drawing, there is shown a unitary connector and valve (110) comprising a housing (112) and a serrated hose tail (114) having a bore (116).

The housing has three main internal bores, the smallest diameter bore being a smooth bore (118) having a threaded length (120) a slightly larger smooth bore (122), and a bore (124) which is the largest in diameter.

A shoulder (126) is formed between the bores (116, 118) and supports one end of a spring (132).

A valve member (130) having a spindle (130A) is located in the bore (118) and has a shoulder (128) supporting the other end of the spring (132).

The spring (132) is located around spindle (130A) of the valve member (130) and urges the latter in the direction of arrow A in the drawing.

The valve member (130) is retained in position by means of a valve cap (134) which has a screw threaded length (134A) engaging the threaded length (120) of the bore (118). An O-ring (129) forms a seal between the valve cap (134) and the housing (112).

The valve cap (134) has internal bore (134B) which terminates in a conical valve seat (134C), through which a probe (130B) of the valve member (130) protrudes.

The valve member (130) is provided with an O-ring (136) so as to seal the valve member against the valve seat (134C).

The connector has a connecting sleeve (140) of a standard form which houses a spring (142) and ball bearings (144), the sleeve being retained by a ring or cir-clip (146).

The bore (124) is also provided with a seal (148) so as to sealingly engage with any connector inserted into the bore (124).

The valve cap (134) has radially extending slots or other formations on its front face (150) to receive a removal tool whereby the cap (134) may be unthreaded and removed to permit retrieval of the valve member (130).

It will be appreciated that as the housing (112) is a unitary construction a leak path has been removed as compared with the known two component valve housings. Also the unitary design enables the valve member to be introduced through the front of the connector, rather than the rear. To introduce the valve member from the rear would mean that the hose tail would have to be a separate component leading to another potential leak path.

The provision of the valve cap (134) allows for easy assembly of the valve member within the housing and replacement and maintenance of the valve member when required.

In the case of known connectors the valve members are usually held in place by cir-clips and it is often extremely difficulty or even impossible to remove them when maintenance or replacement is required, resulting in the whole connector having to be replaced. In the case of the connector according to the present invention the valve member and any other component can be readily replaced and the connector re-used.

## Claims

1. A combined connector and valve comprising a tubular housing (112) defining a bore (118, 120, 122, 124) axially extending through the housing from end to end thereof, and a spring loaded valve member (130) located within the bore and sealingly engaging a valve seat (134C) in the bore, the tubular housing comprising a serrated hose tail (114) at one end of the tubular housing, a cap (134) located within the bore and providing said valve seat to be sealingly engaged by the valve member, and a seal ring (129) located between the cap and the housing to prevent fluid passing through said bore around the cap, the cap being formed at (150) to receive a removal tool to be passed along the bore for removal of the cap through the bore; **characterised in that** the tubular housing (112) is a one-piece body including the serrated hose tail (114) and containing the cap (134), the spring-loaded valve member (130) and the seal ring (129); **in that** the bore contains a further seal ring (148) so as to sealingly engage with any connector inserted into the bore (124) at the end of the housing remote from the hose tail (114); and wherein the housing (112) has a spring-loaded connecting sleeve (140) containing ball bearings (144) retained in an end region of the one-piece body opposite that of the serrated hose tail (114).

2. A combined connector and valve according to claim 1, wherein the cap (134) is threadedly engaged within the bore of the housing (112).

3. A combined connector and valve according to claim 2, in which the bore has a threaded length (120) engageable by a threaded length (134A) of the cap.

4. A combined connector and valve according to any preceding claim, wherein the cap (134) has an internal bore (134B) and the valve member (130) has an elongate part (130B) which extends through the bore (134B) in the cap when the valve member is seated.

## Patentansprüche

1. Verbinder mit Ventil, mit einem rohrförmigen Gehäuse (112), das eine Bohrung (118, 120, 122, 124) aufweist, die sich axial durch das Gehäuse von einem zum anderen Ende desselben erstreckt, und einen federbelasteten Abschlusskörper (130), der in der Bohrung angeordnet ist und einen Ventilsitz (134C) in der Bohrung abdichtend berührt, wobei das rohrförmige Gehäuse ein gezahntes Schlauchanschlussstück (114) an einem Ende des rohrförmigen Gehäuses aufweist, eine Kappe (134), die in der Bohrung angeordnet ist und bewirkt, dass der Ventilsitz durch den Abschlusskörper abdichtend berührt wird, und einen Dichtring (129), der zwischen der Kappe und dem Gehäuse angeordnet ist, um zu verhindern, dass Fluid durch die Bohrung und um die Kappe strömt, wobei die Kappe bei (150) dafür ausgebildet ist, ein Ausbauwerkzeug zu empfangen, das durch die Bohrung hindurchgeführt wird, um die Kappe durch die Bohrung zu entnehmen; **dadurch gekennzeichnet, dass** das rohrförmige Gehäuse (112) ein einstückiger Körper ist, der das gezahnte Schlauchanschlussstück (114) aufweist und die Kappe (134), den federbelasteten Abschlusskörper (130) und den Dichtring (129) enthält; dass die Bohrung einen weiteren Dichtring (148) enthält, der mit einem Steckverbinder, welcher in die Bohrung (124) an dem von dem Schlauchanschlussstück (114) entfernten Ende des Gehäuses eingeführt wird, in abdichtende Berührung gebracht wird; und wobei das Gehäuse (112) eine federbelastete Verbindungshülse (140) hat, die Lagerkugeln (144) enthält, welche in einem Endgebiet des einstückigen Körpers gehalten werden, das zu dem des gezackten Schlauchanschlussstückes (114) entgegengesetzt ist.

2. Verbinder mit Ventil nach Anspruch 1, wobei die Kappe (134) innerhalb der Bohrung des Gehäuses (112) in Gewindeeingriff ist.

3. Verbinder mit Ventil nach Anspruch 2, wobei die Bohrung einen Gewindeabschnitt (120) hat, der mit einem Gewindeabschnitt (134A) der Kappe in Eingriff bringbar ist.

4. Verbinder mit Ventil nach einem der vorhergehenden Ansprüche, wobei die Kappe (134) eine innere Bohrung (134B) hat und wobei der Abschlusskörper (130) einen langgestreckten Teil (130B) hat, der sich durch die Bohrung (134B) in der Kappe erstreckt, wenn der Abschlusskörper aufsitzt.

## Revendications

1. Connecteur et valve combinés comprenant un logement tubulaire (112) définissant un alésage (118, 120, 122, 124) s'étendant axialement à travers le logement de bout en bout de celui-ci, et un organe de valve à ressort (130) situé au sein de l'alésage et venant en prise étanche avec un siège de valve (134C) dans l'alésage, le logement tubulaire comprenant un bout de tuyau flexible crénelé (114) à une extrémité du logement tubulaire, une capsule (134) située au sein de l'alésage et assurant que ledit siège de valve soit engagé de manière étanche par ledit organe de valve, et un anneau d'étanchéité (129) situé entre la capsule et le logement pour empêcher le passage de fluide à travers ledit alésage autour de la capsule, la capsule étant formée en 150 pour recevoir un outil de retrait devant être passé le long de l'alésage pour retirer la capsule à travers l'alésage ; **caractérisé en ce que** le logement tubulaire (112) est un corps d'une seule pièce incluant le bout du tuyau flexible crénelé (114) et contenant la capsule (134), l'organe de valve à ressort (130) et l'anneau d'étanchéité (129) ; dans lequel l'alésage contient un autre anneau d'étanchéité (148) de façon à venir en prise étanche avec un connecteur inséré dans l'alésage (124) à l'extrémité du logement éloigné du bout de tuyau flexible (114) ; et dans lequel le logement (112) a un manchon de connexion à ressort (140) contenant des roulements à bille (144) retenus dans une région d'extrémité du corps en une seule pièce opposés de celui du bout de tuyau flexible crénelé (114).

2. Connecteur et valve combinés selon la revendication 1, dans lesquels la capsule (134) est engagée à vis au sein de l'alésage du logement (112).

3. Connecteur et valve combinés selon la revendication 2, dans lesquels l'alésage a une longueur filetée (120) pouvant être engagée par une longueur filetée (134A) de la capsule.

4. Connecteur et valve combinés selon l'une quelconque des revendications précédentes, dans lesquels la capsule (134) a un alésage interne (134B) et l'organe de valve (130) a une partie allongée (130B) qui s'étend à travers l'alésage (134B) dans la capsule quand l'organe de valve est sur le siège de valve.
